# EUROPEAN PATENT SPECIFICATION

(11) **EP 3 644 456 B1**
(45) Date of publication and mention of the grant of the patent: **21.07.2021**
(21) Application number: 18202931.4
(22) Date of filing: 26.10.2018
(51) Int. Cl.: H01R 13/66, H01R 24/28, H01R 13/436, H01R 13/426, B60L 53/16, H01R 24/86, H01R 13/645, H01R 13/74, H01R 13/639, H01R 13/621, H01R 13/512

(54) **CONNECTOR-ASSEMBLY WITH THERMAL MONITORING**
VERBINDERANORDNUNG MIT THERMISCHER ÜBERWACHUNG
ENSEMBLE CONNECTEUR AVEC SURVEILLANCE THERMIQUE

(43) Date of publication of application: 29.04.2020
(73) Proprietor: Aptiv Technologies Limited, St. Michael (BB)
(72) Inventor: BEHRENBECK, Heiko, D-42399 Wuppertal (DE); HALBACH, Paul, G, D-42369 Wuppertal (DE); OEKEN, Andre, 40627 Düsseldorf (DE)
(74) Representative: Manitz Finsterwald Patent- und Rechtsanwaltspartnerschaft mbB

(56) References cited:
- WO-A1-2018/192805
- DE-A1-102016 107 401
- US-B2- 9 233 615

## Description

### TECHNICAL FIELD

The present invention relates generally to an electrical connector-assembly according to the preamble of claim 1 (DE 10 2016 107 401 A1) that determines a temperature of electrical-terminals.

### BACKGROUND OF THE INVENTION

The present invention relates more particularly to battery charging systems for electric vehicles where a temperature of the electrical-terminals may exceed a specified value in a relatively short period of time causing cause damage to the charging system. A temperature rise above a critical level may occur before the temperature sensing device measures the peak temperature.

US 9 233 615 B2 and WO 2018/192805 A1 disclose charging plugs for motor vehicles.

### SUMMARY OF THE INVENTION

The present invention proposes to solve the above mentioned problem by providing a connector-assembly according to claim 1 that includes a connector-housing, a retainer, electrical-terminals, a printed circuit board, temperature-sensors, and heat-transfer-elements. The connector-housing is configured to house a plurality of electrical-terminals. The connector-housing includes a base and a cover. The base defines a terminal-cavity. The retainer has a first-side and a second-side. The retainer is configured to retain the plurality of electrical-terminals within the connector-housing. The retainer is disposed within the terminal-cavity. The retainer has a generally disc-shape defining a diameter that is perpendicular to a mating-axis of the connector-assembly. The retainer further defines a plurality of U-shaped channels positioned proximate a perimeter of the retainer. The plurality of U-shaped channels connect the first-side to the second-side and define open-ends and closed-ends, with the open-ends terminating at the perimeter. The retainer further defines a plurality of apertures proximate the closed-ends. The plurality of apertures connect the first-side to the second-side. The retainer further defines a plurality of U-shaped cavities on the second-side. The plurality of U-shaped cavities are coaxially located proximate the plurality of U-shaped channels. The printed circuit board includes a plurality of temperature-sensors configured to detect a temperature of each of the plurality of electrical-terminals. The printed circuit board overlays the first-side of the retainer and is interposed between the retainer and the cover. The plurality of temperature-sensors extend beyond a mounting-surface of the printed circuit board and are disposed within the plurality of apertures. A plurality of heat-transfer-elements are disposed within the plurality of U-shaped cavities configured to transfer heat from the plurality of electrical-terminals to the plurality of temperature-sensors. Each one of the plurality of heat-transfer-elements are interposed between and in direct contact with one of the plurality of electrical-terminals and one of the plurality of temperature-sensors.

According to other advantageous features of the present invention:
- each of the plurality of heat-transfer-elements include a plurality of mounting-lugs extending beyond a mating-surface, the plurality of mounting-lugs disposed within mounting-cavities defined by the second-side of the retainer;
- the plurality of mounting-lugs include a first-mounting-lug located at an apex of an arc defined by the each of the plurality of heat-transfer-elements;
- the first-mounting-lugs are individually disposed within the plurality of apertures and are in individual direct contact with the plurality of temperature-sensors;
- the first-mounting-lugs define temperature-sensor-cavities into which each of the plurality of temperature-sensors are disposed;
- an inner-radius of the arc is equal to a radius of a shaft defined by the electrical-terminal;
- the inner-radius defines flat walls aligned with the mating-axis and engage a cylindrical-surface defined by the shaft;
- the retainer includes a plurality of locking-elements disposed within the plurality of U-shaped channels configured to engage grooves defined by shafts of the plurality of electrical-terminals;
- the plurality of locking-elements extend beyond walls of the plurality of U-shaped channels in a direction perpendicular to the mating-axis;
- a closest-distance between each of the plurality of temperature-sensors is in a range from about 6.0mm to about 7.0mm;
- each of the plurality of heat-transfer elements contact an area of each electrical-terminal in a range from about 18mm2 to about 19mm2.

### BRIEF DESCRIPTION OF THE DRAWINGS

The present invention is now described by way of example with reference to the accompanying drawings in which:
- figure 1 is an exploded view of a connector-assembly according to a preferred embodiment of the invention;
- figure 2 is an exploded view of a connector-housing of figure 1;
- figure 3a is view of a first-side of a retainer of the connector-housing of figure 2;
- figure 3b is view of a second-side of the retainer of the connector-housing of figure 2;
- figure 4a is a perspective view of a printed circuit board of the connector-housing of figure 2;
- figure 4b is a top view of the printed circuit board of the connector-housing of figure 2;
- figure 4c is a side view of the printed circuit board of the connector-housing of figure 2;
- figure 4d is a bottom view of the printed circuit board of the connector-housing of figure 2;
- figure 5 is a perspective view of the printed circuit board, retainer, electrical-terminals, and heat-transfer-devices of the connector-housing of figure 2;
- figure 6 is a section view of a portion of the connector-housing of figure 2;
- figure 7a is a bottom view of the heat-transfer-element of the connector-housing of figure 2;
- figure 7b is a side view of the heat-transfer-element of the connector-housing of figure 2;
- figure 7c is a top view of the heat-transfer-element of the connector-housing of figure 2;
- figure 7d is a bottom perspective view of the heat-transfer-element of the connector-housing of figure 2;
- figure 7e is a top perspective view of the heat-transfer-element of the connector-housing of figure 2;
- figure 8a is a section view of the heat-transfer-element of the connector-housing of figure 2;
- figure 8b is a perspective view of the heat-transfer-element and electrical-connector of the connector-housing of figure 2.

### DESCRIPTION OF THE PREFERRED EMBODIMENTS

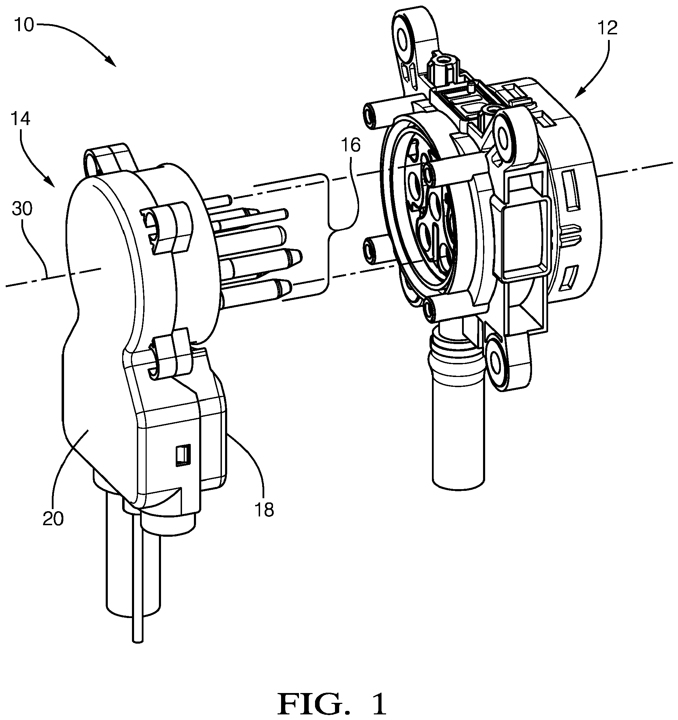

Hereinafter, a connector-assembly 10 for an electric vehicle battery charging system according to an embodiment of the present invention will be described with reference to the figures. Figure 1 is a perspective view of the connector-assembly 10 separated from a terminal-shroud 12. The connector-assembly 10 includes a connector-housing 14 configured to house a plurality of electrical-terminals 16, hereafter referred to as the electrical-terminals 16. The electrical-terminals 16 are formed of an electrically conductive material, such as an alloy of copper or aluminum, and may include a conductive coating such as tin. The electrical-terminals 16 are attached to a wire-cable (not specifically shown) that is attached to an electrical power source and may also be attached to a controller-circuit (not shown) configured to monitor a battery charging process.

The connector-housing 14 includes a base 18 and a cover 20. The base 18 and cover 20 are formed a polymeric dielectric material. The polymeric dielectric material may be any polymeric dielectric material capable of electrically isolating portions of the electrical-terminals 16, and is preferably a polyamide (NYLON). The polymeric dielectric material may include a fiber fill (glass or other fiber) to increase a temperature resistance and a strength of the connector-housing 14.

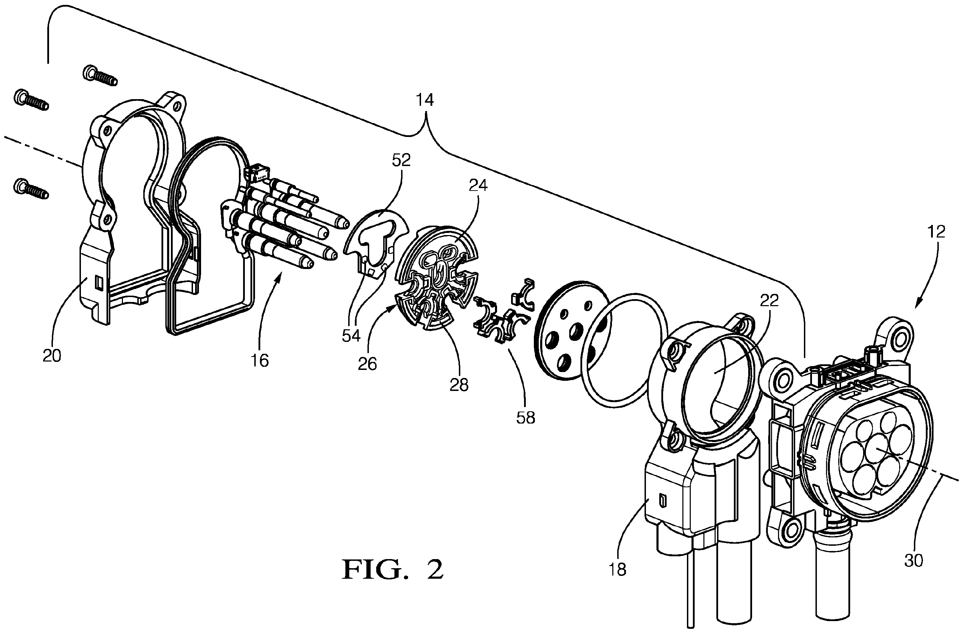

Figure 2 is an exploded perspective view of the connector-assembly 10 of figure 1 illustrating internal components. The base 18 defines a terminal-cavity 22 into which a retainer 24, having a first-side 26 and a second-side 28, is disposed. The retainer 24 is configured to retain the electrical-terminals 16 within the connector-housing 14. The retainer 24 has a generally disc-shape defining a diameter that is perpendicular to a mating-axis 30 of the connector-assembly 10. The retainer 24 may be formed of any polymeric dielectric material suitable for the application, and is preferably formed of the same dielectric material as the connector-housing 14.

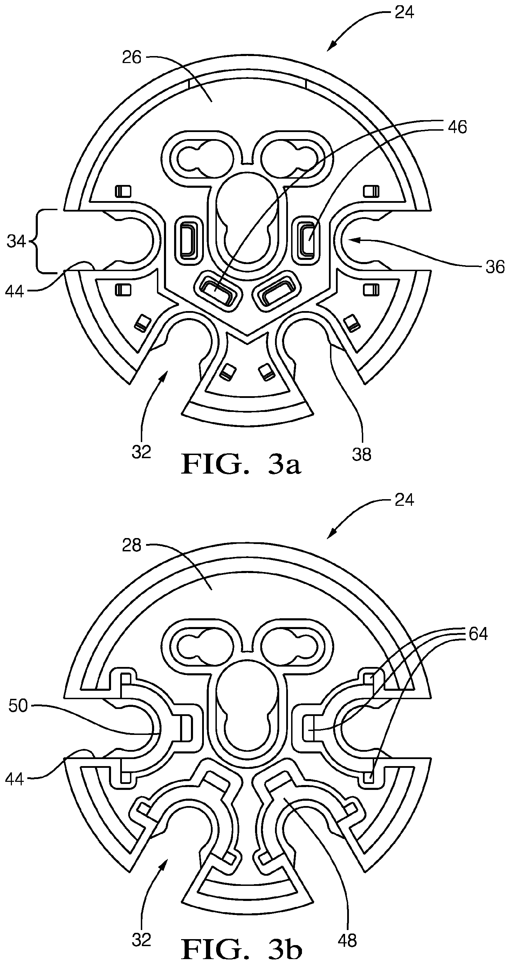

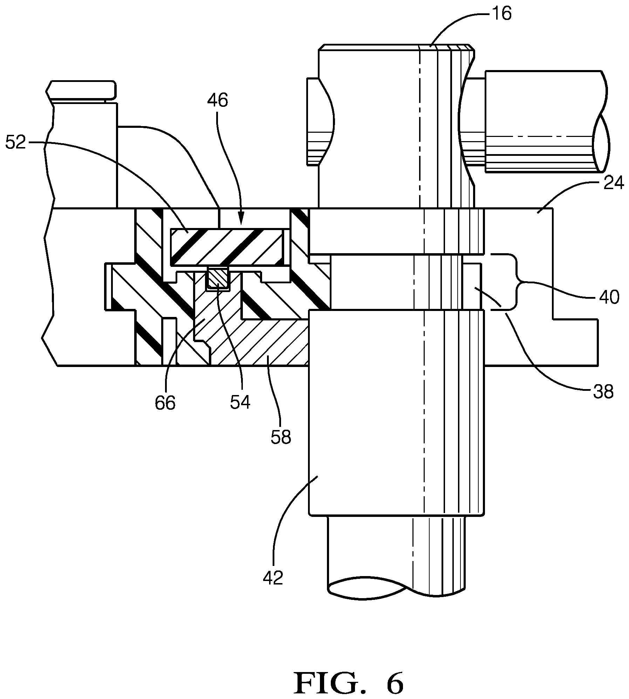

Figures 3a to 3b illustrate the retainer 24 isolated from the connector-housing 14, and specifically illustrate the first-side 26 and the second-side 28. The retainer 24 further defines a plurality of U-shaped channels 32, hereafter referred to as the channels 32, positioned proximate a perimeter of the retainer 24. The channels 32 connect the first-side 26 to the second-side 28 and define open-ends 34 and closed-ends 36, with the open-ends 34 terminating at the perimeter of the retainer 24. The retainer 24 includes a plurality of locking-elements 38 (the locking-elements 38) disposed within the channels 32 that are configured to engage grooves 40 defined by shafts 42 of the electrical-terminals 16 (see figure 6). The locking-elements 38 extend beyond walls 44 of the channels 32 in a direction perpendicular to the mating-axis 30 and have a generally C-shape.

The retainer 24 further defines a plurality of apertures 46 (the apertures 46) proximate the closed-ends 36 of the channels 32 that also connect the first-side 26 to the second-side 28. That is, each channel 32 has a corresponding aperture 46 that is positioned proximate the closed-end 36 of the channel 32, the purpose of which will be explained in more detail below. Referring to figure 3b, the retainer 24 further defines a plurality of U-shaped cavities 48 (the U-shaped cavities 48) on the second-side 28 that are coaxially located proximate the channels 32. In other words, inner-arcs 50 defined by the U-shaped cavities 48 are co-linear with the walls 44 of the channels 32. The function of the U-shaped cavities 48 will be explained in more detail below.

Referring back to figure 2, the connector-assembly 10 also includes a printed circuit board 52 (PCB 52) including a plurality of temperature-sensors 54 (the temperature-sensors 54) configured to detect a temperature of each of the electrical-terminals 16. The temperature-sensors 54 may be any temperature-sensor 54 suitable for the application, and in the example illustrated in figure 2, are negative temperature coefficient type (NTC-type) temperature-sensors 54. In the example illustrated in figure 2, the temperature-sensors 54 are surface mount devices attached to the PCB 52 and are connected to electronic circuitry interfaced to the controller-circuit through a connector (not specifically shown). The PCB 52 overlays the first-side 26 of the retainer 24 and is interposed between the retainer 24 and the cover 20.

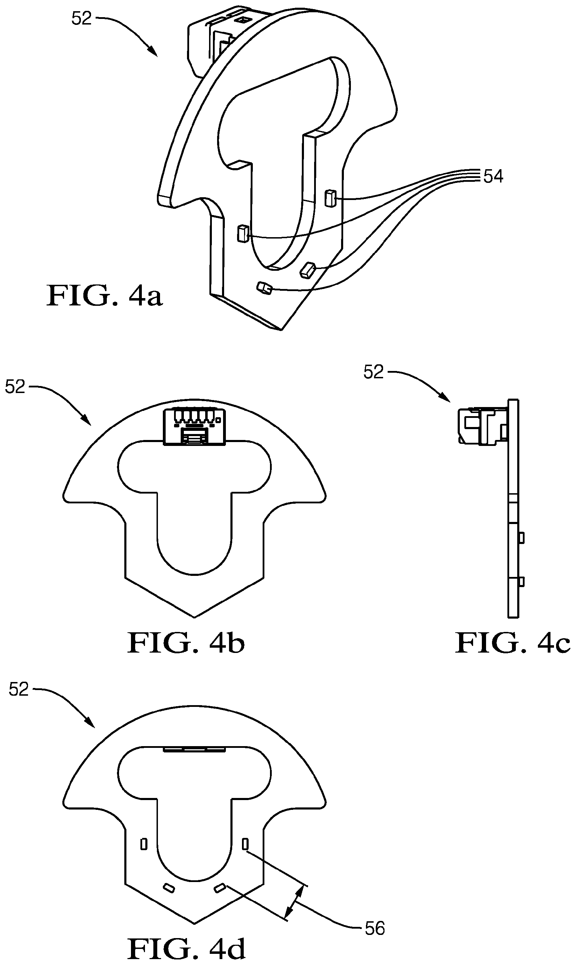

Figures 4a to 4d illustrate an arrangement of the temperature-sensors 54 mounted to the PCB 52. The temperature-sensors 54 extend beyond a mounting-surface of the PCB 52 and are spaced such that a closest-distance 56 between each of the temperature-sensors 54 is in a range from about 6.0mm to about 7.0mm. The closest-distance 56 in this range has the technical benefit of reducing a thermal cross-talk between adjacent temperature-sensors 54 that may cause erroneous temperature readings.

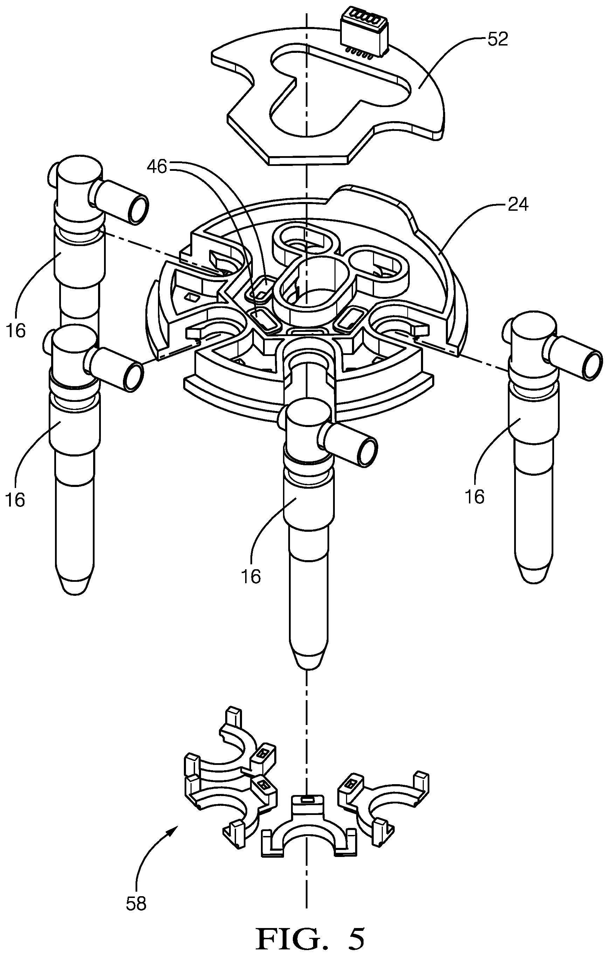

Figure 5 is an exploded perspective view of the retainer 24, electrical-terminals 16, and PCB 52 isolated from the connector-assembly 10. The temperature-sensors 54 are disposed within the apertures 46 defined by the retainer 24. The connector-assembly 10 also includes a plurality of heat-transfer-elements 58 (the heat-transfer-elements 58) that are disposed within the U-shaped cavities 48 of the second-side 28 of the retainer 24. The heat-transfer-elements 58 are configured to transfer heat from the electrical-terminals 16 to the temperature-sensors 54, and each one of heat-transfer-elements 58 are interposed between, and in direct contact with, one of the electrical-terminals 16 and one of the temperature-sensors 54 (see figure 6). The heat-transfer-elements 58 are formed of a ceramic dielectric material that provides both electrical isolation and thermal conduction. One such ceramic dielectric material is the A-997 aluminum oxide from BCE® Special Ceramics GmbH, of Mannheim, Germany.

Figure 6 is a section view of a portion of the retainer 24 illustrating the electrical-terminal 16, the PCB 52, the temperature-sensor 54, and the heat-transfer-element 58. The heat-transfer-element 58 forms a path of conduction for heat to transfer from the shaft 42 of the electrical-terminal 16 to the temperature-sensor 54 mounted to the PCB 52. The dielectric properties of the heat-transfer-element 58 inhibit an electrical short circuit between the electrical-terminal 16 and the PCB 52, while the thermal conductivity of the ceramic material is as much as twenty times greater than the surrounding polymeric dielectric material.

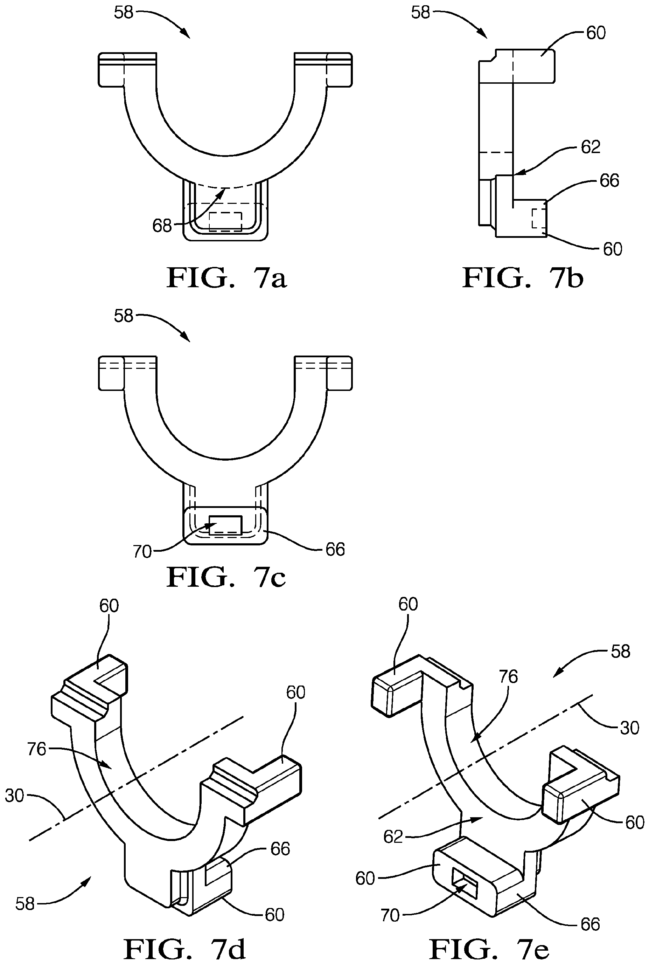

Figures 7a to 7e illustrate several views of the heat-transfer-elements 58. Each of the heat-transfer-elements 58 include a plurality of mounting-lugs 60 (the mounting-lugs 60) extending beyond a mating-surface 62 of the heat-transfer-elements 58. The mounting-lugs 60 are disposed within mounting-cavities 64 defined by the second-side 28 of the retainer 24 (see figure 3b). The mounting-lugs 60 include a first-mounting-lug 66 located at an apex 68 of an arc (see figure 7a) defined by the each of the heat-transfer-elements 58. The first-mounting-lugs 66 of each individual heat-transfer-element 58 are individually disposed within the apertures 46 and are in individual direct contact with the each of temperature-sensors 54. Referring to figures 7c and 7e, the first-mounting-lugs 66 define temperature-sensor-cavities 70 into which each of the temperature-sensors 54 are disposed. The temperature-sensor-cavities 70 provide the technical benefit of increasing a contact area between the heat-transfer-element 58 and the temperature-sensor 54, compared to a butt-joint, for example.

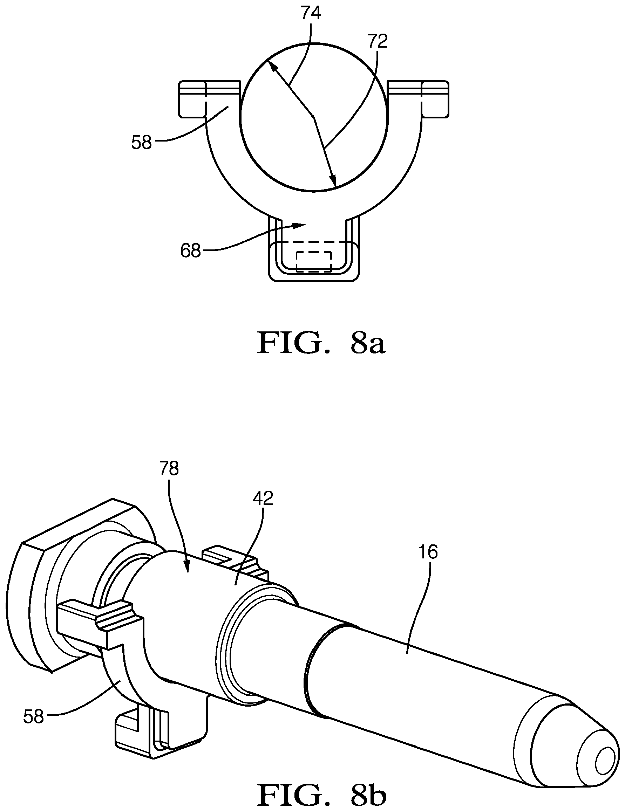

Figure 8a is a bottom view of the heat-transfer-element 58 from figure 7a and a cross section of the electrical-terminal 16 orthogonal to the mating-axis 30, and illustrates the contact between the two components. An inner-radius 72 of the arc defined by the heat-transfer-element 58 is equal to a radius 74 of the shaft 42 of the electrical-terminal 16. Additionally, the inner-radius 72 defines flat-walls 76 (see figures 7d and 7e) aligned with the mating-axis 30 that engage a cylindrical-surface 78 defined by the shaft 42 (see figure 8b). The equivalent radii result in a contact area between the electrical-terminal 16 and the heat-transfer-element 58 in a range from about 18mm2 to about 19mm2, which the inventors have discovered provides a sufficient balance between the thermal response of the temperature measurement and packaging of the components within the connector-housing 14. Figure 8b is a perspective view of the heat-transfer-element 58 and the electrical-terminal 16 isolated from the connector-connector housing 14 and illustrates an intimate contact between the two components.

## Claims

1. A connector-assembly (10) comprising:
a connector-housing (14) configured to house a plurality of electrical-terminals (16), the connector-housing (14) including a base (18) and a cover (20), the base (18) defining a terminal-cavity (22);
a retainer (24) having a first-side (26) and a second-side (28), the retainer (24) configured to retain the plurality of electrical-terminals (16) within the connector-housing (14), the retainer (24) disposed within the terminal-cavity (22);
the retainer (24) having a generally disc-shape defining a diameter that is perpendicular to a mating-axis (30) of the connector-assembly (10);
the retainer (24) further defining a plurality of channels (32) positioned proximate a perimeter of the retainer (24);
the plurality of channels (32) connecting the first-side (26) to the second-side (28);
the retainer (24) further defining a plurality of apertures (46) proximate the closed-ends (36), the plurality of apertures (46) connecting the first-side (26) to the second-side (28);
a printed circuit board (52) including a plurality of temperature-sensors (54) configured to detect a temperature of each of the plurality of electrical-terminals (16);
the plurality of temperature-sensors (54) extending beyond a mounting-surface of the printed circuit board (52) and disposed within the plurality of apertures (46);
a plurality of heat-transfer-elements (58) are configured to transfer heat from the plurality of electrical-terminals (16) to the plurality of temperature-sensors (54), wherein each one of the plurality of heat-transfer-elements (58) are interposed between and in direct contact with one of the plurality of electrical-terminals (16) and one of the plurality of temperature-sensors (54);
**characterized in that**
the printed circuit board (52) overlaying the first-side (26) of the retainer (24) and interposed between the retainer (24) and the cover (20);
the channels (32) are U-shaped;
the plurality of U-shaped channels (32) define open-ends (34) and closed-ends (36), the open-ends (34) terminating at the perimeter;
the retainer (24) further defines a plurality of U-shaped cavities (48) on the second-side (28), the plurality of U-shaped cavities (48) coaxially located proximate the plurality of channels (32);
the plurality of heat-transfer-elements (58) are disposed within the plurality of U-shaped cavities (48).

2. The connector-assembly (10) in accordance with claim 1, **characterized in that** each of the plurality of heat-transfer-elements (58) include a plurality of mounting-lugs (60) extending beyond a mating-surface (62), the plurality of mounting-lugs (60) disposed within mounting-cavities (64) defined by the second-side (28) of the retainer (24).

3. The connector-assembly (10) in accordance with claim 2, **characterized in that** the plurality of mounting-lugs (60) include a first-mounting-lug (66) located at an apex (68) of an arc defined by the each of the plurality of heat-transfer-elements (58).

4. The connector-assembly (10) in accordance with claim 3, **characterized in that** the first-mounting-lugs (66) are individually disposed within the plurality of apertures (46) and are in individual direct contact with the plurality of temperature-sensors (54).

5. The connector-assembly (10) in accordance with claim 4, **characterized in that** the first-mounting-lugs (66) define temperature-sensor-cavities (70) into which each of the plurality of temperature-sensors (54) are disposed.

6. The connector-assembly (10) in accordance with any one of claims 3 to 5, **characterized in that** an inner-radius (72) of the arc is equal to a radius (74) of a shaft (42) defined by the plurality of electrical-terminals (16).

7. The connector-assembly (10) in accordance with claim 6, **characterized in that** the inner-radius (72) defines flat walls (44) aligned with the mating-axis (30) and engage a cylindrical-surface (78) defined by the shaft (42).

8. The connector-assembly (10) in accordance with any one of claims 1 to 7, **characterized in that** the retainer (24) includes a plurality of locking-elements (38) disposed within the plurality of U-shaped channels (32) configured to engage grooves (40) defined by shafts (42) of the plurality of electrical-terminals (16).

9. The connector-assembly (10) in accordance with claim 8, **characterized in that** the plurality of locking-elements (38) extend beyond walls (44) of the plurality of U-shaped channels (32) in a direction perpendicular to the mating-axis (30).

10. The connector-assembly (10) in accordance with any one of claims 1 to 9, **characterized in that** a closest-distance (56) between each of the plurality of temperature-sensors (54) is in a range from about 6.0mm to about 7.0mm.

11. The connector-assembly (10) in accordance with any one of claims 1 to 10, **characterized in that** each of the plurality of heat-transfer elements contact an area of each electrical-terminal (16) in a range from about 18mm2 to about 19mm2.

## Patentansprüche

1. Verbinderanordnung (10), die umfasst:
ein Verbindergehäuse (14), das so konfiguriert ist, dass es mehrere elektrische Anschlüsse (16) aufnimmt, wobei das Verbindergehäuse (14) eine Basis (18) und eine Abdeckung (20) umfasst, wobei die Basis (18) einen Anschluss-Hohlraum (22) definiert;
einen Halter (24) mit einer ersten Seite (26) und einer zweiten Seite (28), wobei der Halter (24) so konfiguriert ist, dass er die mehreren elektrischen Anschlüsse (16) innerhalb des Verbindergehäuses (14) festhält, wobei der Halter (24) innerhalb des Anschluss-Hohlraums (22) angeordnet ist;
wobei der Halter (24) eine allgemein scheibenförmige Gestalt aufweist, die einen Durchmesser definiert, der rechtwinklig zu einer Steckachse (30) der Verbinderanordnung (10) ist;
wobei der Halter (24) ferner mehrere Kanäle (32) definiert, die in der Nähe eines Umfangs des Halters (24) angeordnet sind;
wobei die mehreren Kanäle (32) die erste Seite (26) mit der zweiten Seite (28) verbinden;
wobei der Halter (24) ferner mehrere Öffnungen (46) in der Nähe der geschlossenen Enden (36) definiert, wobei die mehreren Öffnungen (46) die erste Seite (26) mit der zweiten Seite (28) verbinden;
eine gedruckte Leiterplatte (52), die mehrere Temperatursensoren (54) enthält, die so konfiguriert sind, dass sie eine Temperatur von jedem der mehreren elektrischen Anschlüsse (16) erfassen;
wobei sich die mehreren Temperatursensoren (54) über eine Montagefläche der gedruckten Leiterplatte (52) hinaus erstrecken und innerhalb der mehreren Öffnungen (46) angeordnet sind;
wobei mehrere Wärmeübertragungselemente (58) konfiguriert sind, um Wärme von den mehreren elektrischen Anschlüssen (16) zu den mehreren Temperatursensoren (54) zu übertragen, wobei jedes einzelne der mehreren Wärmeübertragungselemente (58) zwischen und in direktem Kontakt mit einem der mehreren elektrischen Anschlüsse (16) und einem der mehreren Temperatursensoren (54) angeordnet ist;
**dadurch gekennzeichnet, dass**
die gedruckte Leiterplatte (52) die erste Seite (26) des Halters (24) überlagert und zwischen dem Halter (24) und der Abdeckung (20) angeordnet ist;
die Kanäle (32) U-förmig sind;
die mehreren U-förmigen Kanäle (32) offene Enden (34) und geschlossene Enden (36) definieren, wobei die offenen Enden (34) an dem Umfang enden;
der Halter (24) ferner mehrere U-förmige Hohlräume (48) auf der zweiten Seite (28) definiert, wobei die mehreren U-förmigen Hohlräume (48) koaxial in der Nähe der mehreren Kanäle (32) angeordnet sind;
die mehreren Wärmeübertragungselemente (58) innerhalb der mehreren U-förmigen Hohlräume (48) angeordnet sind.

2. Verbinderanordnung (10) nach Anspruch 1, **dadurch gekennzeichnet, dass** jedes der mehreren Wärmeübertragungselemente (58) mehrere Befestigungszapfen (60) aufweist, die sich über eine Passfläche (62) hinaus erstrecken, wobei die mehreren Befestigungszapfen (60) in Befestigungshohlräumen (64) angeordnet sind, die durch die zweite Seite (28) des Halters (24) definiert sind.

3. Verbinderanordnung (10) nach Anspruch 2, **dadurch gekennzeichnet, dass** die mehreren Befestigungszapfen (60) einen ersten Befestigungszapfen (66) aufweisen, der an einem Scheitelpunkt (68) eines Bogens angeordnet ist, der durch jedes der mehreren Wärmeübertragungselemente (58) definiert ist.

4. Verbinderanordnung (10) nach Anspruch 3, **dadurch gekennzeichnet, dass** die ersten Befestigungszapfen (66) einzeln in den mehreren Öffnungen (46) angeordnet sind und einzeln in direktem Kontakt mit den mehreren Temperatursensoren (54) stehen.

5. Verbinderanordnung (10) nach Anspruch 4, **dadurch gekennzeichnet, dass** die ersten Befestigungszapfen (66) Temperatursensor-Hohlräume (70) definieren, in denen jeder der mehreren Temperatursensoren (54) angeordnet ist.

6. Verbinderanordnung (10) nach einem der Ansprüche 3 bis 5, **dadurch gekennzeichnet, dass** ein Innenradius (72) des Bogens gleich einem Radius (74) eines Schafts (42) ist, der durch die mehreren elektrischen Anschlüsse (16) definiert ist.

7. Verbinderanordnung (10) nach Anspruch 6, **dadurch gekennzeichnet, dass** der Innenradius (72) flache Wände (44) definiert, die mit der Steckachse (30) ausgerichtet sind und die in eine von dem Schaft (42) definierte Zylinderfläche (78) eingreifen.

8. Verbinderanordnung (10) nach einem der Ansprüche 1 bis 7, **dadurch gekennzeichnet, dass** der Halter (24) mehrere Verriegelungselemente (38) aufweist, die innerhalb der mehreren U-förmigen Kanäle (32) angeordnet sind, die so konfiguriert sind, dass sie in Nuten (40) eingreifen, die durch Schäfte (42) der mehreren elektrischen Anschlüsse (16) definiert sind.

9. Verbinderanordnung (10) nach Anspruch 8, **dadurch gekennzeichnet, dass** sich die mehreren Verriegelungselemente (38) über Wände (44) der mehreren U-förmigen Kanäle (32) hinaus in einer Richtung rechtwinklig zu der Steckachse (30) erstrecken.

10. Verbinderanordnung (10) nach einem der Ansprüche 1 bis 9, **dadurch gekennzeichnet, dass** ein engster Abstand (56) zwischen jedem der mehreren Temperatursensoren (54) in einem Bereich von etwa 6,0 mm bis etwa 7,0 mm liegt.

11. Verbinderanordnung (10) nach einem der Ansprüche 1 bis 10, **dadurch gekennzeichnet, dass** jedes der mehreren Wärmeübertragungselemente eine Fläche jedes elektrischen Anschlusses (16) in einem Bereich von etwa 18 mm2 bis etwa 19 mm2 kontaktiert.

## Revendications

1. Assemblage de connecteur (10), comprenant :
un boîtier de connecteur (14) configuré pour loger une pluralité de bornes électriques (16), le boîtier de connecteur (14) incluant une base (18) et un couvercle (30), la base (18) définissant une cavité de borne (22) ;
un moyen de maintien (24) ayant un premier côté (26) et un second côté (28), le moyen de maintien étant configuré pour maintenir la pluralité de bornes électriques (16) à l'intérieur du boîtier de connecteur (14), le moyen de maintien (24) étant disposé à l'intérieur de la cavité de borne (22) ;
le moyen de maintien (24) ayant généralement une forme de disque définissant un diamètre qui est perpendiculaire à un axe d'appariement (30) de l'assemblage de connecteur (10) ;
le moyen de maintien (24) définissant en outre une pluralité de canaux (32) positionnés à proximité d'un périmètre du moyen de maintien (24) ;
la pluralité de canaux (32) connectant le premier côté (26) au second côté (28) ;
le moyen de maintien (24) définissant en outre une pluralité d'ouvertures (46) à proximité des extrémités fermées (36), la pluralité d'ouverture (46) connectant le premier côté (26) au second côté (28) ;
une carte à circuit imprimé (52) incluant une pluralité de capteurs de température (54) configurés pour détecter une température de chaque borne parmi la pluralité de bornes électriques (16) ;
la pluralité de capteurs de température (54) s'étendant au-delà d'une surface de montage de la carte à circuit imprimé (52) et étant disposés à l'intérieur de la pluralité d'ouvertures (46) ;
une pluralité d'éléments de transfert de chaleur (58) sont configurés pour transférer de la chaleur depuis la pluralité de bornes électriques (16) à la pluralité de capteurs de température (54), dans lequel chaque élément parmi la pluralité d'éléments de transfert de chaleur (58) est interposé entre et en contact direct avec une borne parmi pluralité de bornes électriques (16) et un capteur parmi la pluralité de capteurs de température (54) ;
**caractérisé en ce que**
la carte à circuit imprimé (52) recouvre le premier côté (26) du moyen de maintien (24) et est interposée entre le moyen de maintien (24) et le couvercle (20) ;
les canaux (32) sont en forme de U ;
la pluralité de canaux en forme de U (32) définissent des extrémités ouvertes (34) et des extrémités fermées (36), les extrémités ouvertes (34) se terminant au niveau du périmètre ;
le moyen de maintien (24) définit en outre une pluralité de cavités en forme de U (48) sur le second côté (28), la pluralité de cavités en forme de U (48) étant coaxialement situées à proximité de la pluralité de canaux (32) ;
la pluralité d'éléments de transfert de chaleur (58) sont disposés à l'intérieur de la pluralité de cavités en forme de U (48).

2. Assemblage de connecteur (10) selon la revendication 1, **caractérisé en ce que** chaque élément parmi la pluralité d'éléments de transfert de chaleur (58) inclut une pluralité de pattes de montage (60) s'étendant au-delà d'une surface d'appariement (62), la pluralité de pattes de montage (60) étant disposées à l'intérieur de cavités de montage (64) définies par le second côté (28) du moyen de maintien (24).

3. Assemblage de connecteur (10) selon la revendication 2, **caractérisé en ce que** la pluralité de pattes de montage (60) inclut une première patte de montage (66) située à un sommet (68) d'un arc défini par chaque élément parmi la pluralité d'éléments de transfert de chaleur (58).

4. Assemblage de connecteur (10) selon la revendication 3, **caractérisé en ce que** les premières pattes de montage (66) sont individuellement disposées à l'intérieur de la pluralité d'ouvertures (46) et sont en contact direct individuel avec la pluralité de capteurs de température (54).

5. Assemblage de connecteur (10) selon la revendication 4, **caractérisé en ce que** les premières pattes de montage (66) définissent des cavités de capteurs de température (70) dans lesquelles chaque capteur parmi la pluralité de capteurs de température (54) est disposé.

6. Assemblage de connecteur (10) sur l'une quelconque des revendications 3 à 5, **caractérisé en ce qu'**un rayon intérieur (72) de l'arc est égal à un rayon (74) d'une broche (42) définie par la pluralité de bornes électriques (16).

7. Assemblage de connecteur (10) selon la revendication 6, **caractérisé en ce que** le rayon intérieur (72) définit des parois plates (44) alignées avec l'axe d'appariement (30) et engage une surface cylindrique (78) définie par la broche (42).

8. Assemblage de connecteur (10) selon l'une quelconque des revendications 1 à 7, **caractérisé en ce que** le moyen de maintien (24) inclut une pluralité d'éléments de verrouillage (38) disposés à l'intérieur de la pluralité de canaux en forme de U (32) configurés pour engager des gorges (40) définie par des broches (42) de la pluralité de bornes électriques (16).

9. Assemblage de connecteur (10) selon la revendication 8, **caractérisé en ce que** la pluralité d'éléments de verrouillage (38) s'étendent au-delà de parois (44) de la pluralité de canaux en forme de U (32) dans une direction perpendiculaire à l'axe d'appariement (30).

10. Assemblage de connecteur (10) selon l'une quelconque des revendications 1 à 9, **caractérisé en ce qu'**une distance la plus proche (56) entre chaque capteur parmi la pluralité de capteurs de température (54) et dans une plage allant d'environ 6,0 mm à environ 7,0 mm.

11. Assemblage de connecteur (10) selon l'une quelconque des revendications 1 à 10, **caractérisé en ce que** chaque élément parmi la pluralité d'éléments de transfert de chaleur vient en contact avec une aire de chaque borne électrique (16) dans une plage allant d'environ 18 mm² à environ 19 mm².
